# EUROPEAN PATENT SPECIFICATION

(11) **EP 1 201 368 B1**
(45) Date of publication and mention of the grant of the patent: **16.01.2008**
(21) Application number: 01125161.8
(22) Date of filing: 23.10.2001
(51) Int. Cl.: B24D 3/32, B24B 37/04

(54) **Polishing pad comprising a water-insoluble substance and method for producing thereof**
Wasserumlöslichen Verbindung enthaltendes Polierkissen und Verfahren zur Herstellung desselben
Tampon de polissage contenant une substance insoluble dans l'eau et son procédé de fabrication

(30) Priority: 24.10.2000 JP 2000324139
(43) Date of publication of application: 02.05.2002
(73) Proprietor: JSR Corporation, Tokyo 104-0045 (JP)
(72) Inventor: Hasegawa, Kou, Tokyo (JP); Koumura, Tomoo, Tokyo (JP); Kobayashi, Yutaka, Tokyo (JP)
(74) Representative: TBK-Patent

(56) References cited:
- EP-A- 1 164 559
- PATENT ABSTRACTS OF JAPAN vol. 2000, no. 05, 14 September 2000 (2000-09-14) & JP 2000 034416 A (JSR CORP), 2 February 2000 (2000-02-02)
- DATABASE WPI Section PQ, Week 7339 Derwent Publications Ltd., London, GB; Class P61, AN 1973-57937U XP002261264 & JP 48 030438 B (DENSHI KAGAKU KK), 20 September 1973 (1973-09-20)
- DATABASE WPI Section PQ, Week 9733 Derwent Publications Ltd., London, GB; Class P61, AN 1997-361957 XP002261265 & RU 2 070 852 C (G N PROIZV OB EDINENIE OPTIKA), 27 December 1996 (1996-12-27)
- DATABASE WPI Section PQ, Week 8248 Derwent Publications Ltd., London, GB; Class P61, AN 1982-04044J XP002261266 & SU 901 041 A (O KT B KRISTALL LE T I IM LENS), 30 January 1982 (1982-01-30)

## Description

### FIELD OF THE INVENTION

The present invention relates to a polishing pad and a method for producing thereof. The polishing pad in the invention is suitable for polishing of the surface of semiconductor wafer and the like.

### DESCRIPTION OF THE RELATED ART

As a method for polishing which can form the surface having the high flatness, an attention has been recently paid to CMP (Chemical Mechanical Polishing). Polishing in CMP is accomplished by sliding the polishing pad against the polishing surface while allowing a slurry of abrasive particles in an aqueous dispersion to flow from the polishing pad surface.

In CMP, the removal rate is a major factor controlling productivity, and it is known that the removal rate can be vastly improved by increasing the retention of the slurry above the conventional level.

Polishing pads for CMP have conventionally been made of foamed polyurethane having pores formed to a size of a few tens of micrometers, and the use of polyurethane introduces the problem of durability of the pad because of its generally poor water resisting. On the other hand, when using an elastomer such as butadiene rubber which has excellent water resisting, the problem of low removal rate due to reduced moisture wettability is introduced.

EP 1164559; a prior art document according to Art. 54 (3) and (4) EPC, describes a polishing pad, obtainable by using a composition comprising a crosslinkable polymer such as 1,2-polybutadiene in order to form a water-insoluble matrix material, a compatibilizer such as block polymers, random copolymers or polymers modified with a carboxyl group, a hydroxyl group, an epoxy group or an amino group, a water-soluble particle dispersed in the matrix material, and a crosslinking agent such as a peroxide.

JP-A-2000034416 describes a polishing pad obtainable by a polymer composition comprising a water-soluble substance in a water-insoluble thermoplastic polymer.

### SUMMARY OF THE INVENTION

It is an object of the present invention, which has been accomplished in light of these circumstances, to provide a composition for forming a polishing pad comprising substances having specific functional groups exhibiting excellent hydrophilic properties and the like, a crosslinked body for polishing pad as well as a polishing pad with excellent water resisting and durability which exhibits excellent polishing performance including a high removal rate and method for producing thereof.

The present invention will now be explained in detail by the further aspects.
1. A composition for forming a polishing pad comprising
   [A] a crosslinkable elastomer having no carboxyl, amino, hydroxyl, epoxy, sulfonic acid and phosphoric acid groups and
   [B] a water-insoluble substance having at least one functional group selected from the group consisting of carboxyl, amino, hydroxyl, epoxy, sulfonic acid and phosphoric acid groups, and a crosslinking agent,
   wherein the amount of [A] is 40 to 99.9 wt% and the amount of [B] is 0.1 to 60 wt%, based on 100 wt% of the total of [A] and [B], wherein a matrix material is formed by a cross-linking reaction of [A] and [B].
2. The composition for forming a polishing pad according to 1 above, wherein the above-mentioned [A] crosslinkable elastomer is 1,2-polybutadiene.
3. The composition for forming a polishing pad according to 1 or 2 above, further comprising [C] a water-soluble substance.
4. The composition for forming a polishing pad according to 3 above, wherein the amount of [C] is 5 to 50 vol% based on 100 vol% of the total of [A], [B] and [C].
5. The composition for forming a polishing pad according to 3 or 4 above, wherein the above-mentioned [C] water-soluble substance is cyclodextrin.
6. A crosslinked body for a polishing pad produced by using the composition for forming a polishing pad defined in any one of 1 to 5 above.
7. A polishing pad being characterized in produced by using the composition for forming a polishing pad described in any one of 1 to 5 above.
8. A polishing pad manufactured by processing the crosslinked body for a polishing pad defined in 6 above.
9. A polishing pad according to 7 or 8 above, wherein the above-mentioned polishing pad is porous.
10. A method for producing a polishing pad comprising:
   a first step for kneading a formulation (I) comprising the composition as defined in 1 above, and
   a second step for molding into a polishing pad.
11. The method for producing a polishing pad according to 10 above, further mixing the above-mentioned formulation (I) and [C] a water-soluble substance whose amount is 5 to 50 vol% based on 100 vol% of the total of [A], [B] and [C].

The polishing pad in the invention can be produced by using the composition for forming a polishing pad containing a substance having specific functional group. It exhibits satisfactory polishing performance and allows polishing surfaces to be polished with a high removal rate. The crosslinked body for a polishing pad in the invention is also useful for the aforementioned polishing pad.

### DETAILED DESCRIPTION OF THE INVENTION

The composition for forming a polishing pad in the invention comprises [A] a crosslinkable elastomer having no carboxyl, amino, hydroxyl, epoxy, sulfonic acid and phosphoric acid groups and [B] a water-insoluble substance having at least one functional group selected from the group consisting of carboxyl, amino, hydroxyl, epoxy, sulfonic acid and phosphoric acid groups, in a specific amount, and a crosslinking agent [D].

The "[A] crosslinkable elastomer" is not particularly limited, there may be mentioned diene-based elastomer such as 1,2-polybutadiene, butadiene rubber, isoprene rubber, acrylonitrile-butadiene rubber, styrene-butadiene rubber and styrene-isoprene rubber, ethylene-propylene rubber, acrylic rubber, silicone rubber, fluorine rubber, ethylene-vinyl acetate copolymer, ethylene-ethyl acrylate copolymer, ionomer and the like. These may be used alone or in combination of two or more.

As [A] described above, it is preferred to use a diene-based elastomer which can be easily crosslinked with organic peroxides. 1,2-polybutadiene is particularly preferred among diene-based elastomers above because it gives compositions with high hardness after crosslinking.

The "[B] water-insoluble substance" is not particularly restricted so long as it has at least one functional group from among carboxyl, amino, hydroxyl, epoxy, sulfonic acid and phosphoric acid groups and shows water-insoluble property, and being cross linkable with component [A]. There may be used (1) inorganic particles of fumed silica or colloidal silica having the abovementioned functional groups, (2) modified polymers such as maleic anhydride-modified polyethylene, maleic anhydride-modified polypropylene, terminal hydroxyl polybutadiene and terminal carboxyl polybutadiene with the abovementioned functional groups, and (3) polymers polymerized using monomers having the abovementioned functional groups (including copolymers). These may be used alone or in combination of two or more. Among these, [B] is preferably a polymer from the standpoint of preventing scratches on wafers during polishing, and terminal hydroxyl polybutadiene and terminal carboxyl polybutadiene are particularly preferred.

As copolymers polymerized using monomers having functional groups there may be mentioned copolymers containing (a) an aliphatic conjugated diene monomer unit and (b) a monomer unit having one polymerizable unsaturated group and at least one functional group selected from the group consisting of carboxyl, amino, hydroxyl, epoxy, sulfonic acid and phosphoric acid groups, as the repeating units, or copolymers containing (a) and (b) above with (c) a monomer unit having at least two of polymerizable unsaturated groups.

As a monomer forming the aliphatic conjugated diene monomer unit (a) there may be mentioned 1,3-butadiene, isoprene, 2,3-dimethyl-1,3-butadiene, chloroprene and the like. These may be used alone or in combination of two or more.

Among a monomer which forms the monomer unit (b) having one polymerizable unsaturated group and at least one functional group selected from the group consisting of carboxyl, amino, hydroxyl, epoxy, sulfonic acid and phosphoric acid groups, there may be mentioned, as a monomer having carboxyl group, unsaturated carboxylic acids such as (meth)acrylic acid, maleic acid, fumaric acid, itaconic acid, tetraconic acid, cinnamic acid or the like, and free carboxyl group-containing esters including monoesters of non-polymerizable polyhydric carboxyl acids such as phthalic acid, succinic acid and adipic acid with hydroxyl-containing unsaturated compounds such as (meth)allyl alcohol and 2-hydroxyethyl (meth)acrylate, as well as their salt compounds. Among these, unsaturated carboxylic acids are preferred.

Preferred amino group-containing monomers are those with tertiary amino group. There may be mentioned dialkylaminoalkyl (meth)acrylates such as dimethylaminomethyl (meth)acrylate, diethylaminomethyl (meth)acrylate, 2-dimethylaminoethyl (meth)acrylate, 2-diethylaminoethyl (meth)acrylate, 2-(di-n-propylamino)ethyl (meth)acrylate, 2-dimethylaminopropyl (meth)acrylate, 2-diethylaminopropyl (meth)acrylate, 2-(di-n-propylamino)propyl (meth)acrylate, 3-dimethylaminopropyl (meth)acrylate, 3-diethylaminopropyl (meth)acrylate and 3-(di-n-propylamino)propyl (meth)acrylate; N-dialkylaminoalkyl group-containing unsaturated amides such as N-dimethylaminomethyl (meth)acrylamide, N-diethylaminomethyl (meth)acrylamide, N-(2-dimethylaminoethyl) (meth)acrylamide, N-(2-diethylaminoethyl) (meth)acrylamide, N-(2-dimethylaminopropyl) (meth)acrylamide, N-(2-diethylaminopropyl) (meth)acrylamide, N-(3-dimethylaminopropyl) (meth)acrylamide and N-(3-diethylaminopropyl) (meth)acrylamide; and tertiary amino group-containing vinyl aromatic compounds such as N,N-dimethyl-p-aminostyrene, N,N-diethyl-p-aminostyrene, dimethyl(p-vinylbenzyl)amine, diethyl(p-vinylbenzyl)amine, dimethyl(p-vinylphenethyl)amine, diethyl(p-vinylphenethyl)amine, dimethyl(p-vinylbenzyloxymethyl)amine, dimethyl[2-(p-vinylbenzyloxy)ethyl]amine, diethyl(p-vinylbenzyloxymethyl)amine, diethyl[2-(p-vinylbenzyloxy)ethyl]amine, dimethyl(p-vinylphenethyloxymethyl)amine, dimethyl[2-(p-vinylphenethyloxy)ethyl]amine, diethyl(p-vinylphenethyloxymethyl)amine, diethyl[2-(p-vinylphenethyloxy)ethyl]amine, 2-vinylpyridine, 3-vinylpyridine, 4-vinylpyridine and the like. Among these dialkylaminoalkyl (meth)acrylates and tertiary amino group-containing vinyl aromatic compounds are preferred.

As a monomer having hydroxyl group there may be mentioned hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate and 4-hydroxybutyl (meth)acrylate; mono(meth)acrylates of polyalkyleneglycol (with 2-23 alkyleneglycol units, for example) such as polyethyleneglycol and polypropyleneglycol; hydroxyl group-containing unsaturated amines such as N-hydroxymethyl (meth)acrylamide, N-(2-hydroxyethyl) (meth)acrylamide and N,N-bis(2-hydroxyethyl) (meth)acrylamide; and hydroxyl group-containing vinyl aromatic compounds such as o-hydroxystyrene, m-hydroxystyrene, p-hydroxystyrene, o-hydroxy-α-methylstyrene, m-hydroxy-α-methylstyrene, p-hydroxy-α-methylstyrene, p-vinylbenzyl alcohol; (meth)allyl alcohol and the like. Among these, hydroxyalkyl (meth)acrylates and hydroxyl group-containing vinyl aromatic compounds are preferred.

As a monomer having epoxy group there may be mentioned (meth)allylglycidyl ether, glycidyl (meth)acrylate, 3,4-oxycyclohexyl (meth)acrylate and the like.

As a monomer having sulfonic acid group there may be mentioned (meth)acrylamide-based monomers such as 2-(meth)acrylamide ethanesulfonic acid, 2-(meth)acrylamide propanesulfonic acid, 3-(meth)acrylamide propanesulfonic acid, 2-(meth)acrylamide-2-methylpropanesulfonic acid, 3-(meth)acrylamide-2-methylpropanesulfonic acid and the like; (meth)acrylate-based monomers such as ethyl (meth)acrylate 2-sulfonate, propyl (meth)acrylate 2-sulfonate, propyl (meth)acrylate 3-sulfonate, ethyl (meth)acrylate 1,1-dimethyl-2-sulfonate and the like; vinyl aromatic compound-based monomers such as p-vinylbenzenesulfonic acid and p-isopropenylbenzenesulfonic acid, as well as their salt compounds.

As a monomer having phosphoric acid group there may be mentioned ethylene (meth)acrylate phosphate, trimethylene (meth)acrylate phosphate, tetramethylene (meth)acrylate phosphate, propylene (meth)acrylate phosphate, bis(ethylene(meth)acrylate) phosphate, bis(trimethylene(meth)acrylate) phosphate, bis(tetramethylene(meth)acrylate) phosphate, diethyleneglycol (meth)acrylate phosphate, triethyleneglycol (meth)acrylate phosphate, polyethyleneglycol (meth)acrylate phosphate, bis(diethyleneglycol(meth)acrylate) phosphate, bis(triethyleneglycol(meth)acrylate) phosphate and bis(polyethyleneglycol(meth)acrylate) phosphate, as well as their salt compounds. These listed as a monomer having one polymerizable unsaturated group and at least one functional group selected from the group consisting of a carboxyl group, an amino group, a hydroxyl group, an epoxy group, a sulfonic acid group and a phosphoric acid group may be used alone or in combination of two or more.

As the monomer which forms a monomer unit (c) having at least two polymerizable unsaturated groups there may be mentioned ethyleneglycol di(meth)acrylate, propyleneglycol di(meth)acrylate, 1,4-butanediol di(meth)acrylate, 1,6-hexanediol di(meth)acrylate, trimethylolpropane di(meth)acrylate, trimethylolpropane tri(meth)acrylate, pentaerythritol tri(meth)acrylate, pentaerythritol tetra(meth)acrylate, divinylbenzene, diisopropenylbenzene and trivinylbenzene. These may also be used alone or in combination of two or more.

The content of [A] and [B] above is 40 to 99.9 wt%, more preferably 60 to 99.9 wt% and even more preferably 70 to 99.5 wt% for (A) and 0.1 to 60 wt%, more preferably 0.1 to 40 wt% and even more preferably 0.5 to 30 wt% for [B], based on 100 wt% of the total of [A] and [B]. The content less than 0.1 wt% of [B], a sufficient effect of improving the removal rate may not be achieved. On the other hand, the content exceeding 60 wt% of [B] leads the effect of improving removal rate saturated and reduced moldability or strength of the polishing pad formed using the composition however it depends on the substances included.

The composition for forming a polishing pad in the invention comprises a crosslinking agents. The crosslinking agent is not particularly restricted, the organic peroxide is preferable. In the case of polishing of semiconductor wafer and the like, impurities such as sulfur are undesirable and the crosslinking agent containing sulfur is not preferable.

When the crosslinked body and the polishing pad are formed by using the composition for forming a polishing pad in the invention, [B] above forms a matrix material by co-crosslinking with [A].

The composition for forming a polishing pad in the invention may further comprise the "[C] water-soluble substance".

Above-mentioned [C] is one that can be released from the surface of the matrix material upon contact with water. Thus, the water-soluble substances include substances that dissolve in water such as water-soluble polymers, as well as those which swell and be a gel-like by contacting with water, such as water-absorbing resins. The water-soluble substance may also be one which dissolves or swells in a medium composed mainly of water but also containing methanol or the like. The water-soluble substance is normally dispersed in the matrix material.

The water-soluble substance above may be an organic-based and/or an inorganic-based water-soluble substance.

The organic-based water-soluble substance may be used dextrin, cyclodextrin, mannit, sugars (lactose, etc.), celluloses (hydroxypropyl cellulose, methyl cellulose, etc.), starch, protein, poly vinyl alcohol, poly vinyl pyrrolidone, poly vinyl sulfonic acid, polyacrylic acid, polyethylene oxide, water-soluble photosensitive resins, sulfonated polyisoprenes and the like. Among these, cyclodextrin is preferred.

As inorganic-based water-soluble substances there may be mentioned potassium acetate, potassium nitrate, potassium carbonate, potassium hydrogen carbonate, potassium bromide, potassium phosphate, potassium sulfate, magnesium sulfate and calcium nitrate. Among these, potassium sulfate is preferred. These listed as the water-soluble substance may be used alone or in combinations of two or more. And also, the organic-based and the inorganic-based may be used in combination as well.

When necessary in order to inhibit elution of the water-soluble substance, the water-soluble substance may be subjected to coupling treatment and/or coating treatment.

The shape of the water-soluble substance is not particularly limited. The mean particle size is preferably 0.1 to 500 µm and more preferably 0.5 to 100 µm. If the mean particle size is less than 0.1 µm, the resulting pores are so small that it is not possible to obtain a polishing pad that can adequately hold the abrasive. On the other hand, exceeding 500 µm of the mean particle size leads to reduced mechanical strength of the polishing pad. The mean particle size is defined as the average value of the maximal length of the water-soluble substance.

The content of the water-soluble substance [C] is preferably 5 to 50 vol%, more preferably 10 to 45 vol% and even more preferably 20 to 40 vol% based on 100 vol% of the total of [A], [B] and [C]. If the content of [C] is less than 5 vol%, the resulting pores in the polishing pad are not sufficiently formed, and the removal rate may tend to be reduced. On the other hand, if the content is exceeding 50 vol% it may not be possible to maintain proper values of hardness and mechanical strength of the polishing pad.

When the crosslinked body for a polishing pad or the polishing pad is formed by using the composition for forming a polishing pad containing [C] above, the water-soluble substance [C] is dispersed and contained throughout the entirety of the matrix material. Pores are formed by elution of the water-soluble substance on the uppermost surface of the polishing pad obtained from the polishing pad composition, when it contacts with water in polishing a polished object with the polishing pad. The pores hold slurry and function to temporarily retain the polishing scrap. The average size of the pore formed after release of the water-soluble substance [C] from the polishing pad is preferably 0.1 to 500 µm and more preferably 0.5 to 100 µm. The water-soluble substance [C] contacts with the aqueous medium slurry or water in dressing on the polishing pad, thus dissolving and swelling, and being released from the matrix material.

The water-soluble substance [C] preferably only dissolves in water when exposed on the surface layer in the polishing pad, without absorbing moisture or swelling inside the polishing pad. The water-soluble substance therefore preferably has an outer shell on at least a portion of its exterior which inhibits moisture absorption. The outer shell may be physically attached to the water-soluble substance, chemically bonded to the water-soluble substance or in contact with the water-soluble substance in both ways. As materials that form such an outer shell there may be mentioned epoxy resins, polyimides, polyamides, polysilicates and the like. The outer shell may be formed over only a portion of the water-soluble substance and still provide an adequate effect.

In addition to the function of forming the pores, the water-soluble substance also has a function of increasing the intrusion hardness of the polishing pad (for example, to Shore D hardness of 35 to 100). A larger intrusion hardness will allow increased pressure of the polishing pad to be applied to polishing surfaces. This will not only improve the removal rate but also give higher flatness at the same time. Thus, it is particularly preferred for the water-soluble substance to be a solid that can ensure an adequate intrusion hardness for the polishing pad.

The composition for forming a polishing pad in the invention composition of the invention may also contain abrasive particles (composed silica, alumina, ceria, zirconia, titania and the like), oxidants, alkali metal hydroxides and acids, pH adjustors, surfactants, scratch-resistant agents and the like that are included in conventional slurries in addition to the water-soluble substance. This will allow polishing to be carried out by supplying only water when polishing with the polishing pad formed using the composition containing the above components.

As examples of specific oxidizing agents there may be mentioned hydrogen peroxide, organic peroxides such as peracetic acid, perbenzoic acid, tert-butylhydroperoxide, and the like, permanganate compounds such as potassium permanganate, and the like, bichromate compounds such as potassium bichromate, and the like, halogenate compounds such as potassium iodate, and the like, nitric compounds such as nitric acid, iron nitrate, and the like, perhalogenate compounds such as perchloric acid, and the like, transition metal salts such as potassium ferricyanide, and the like, persulfuric compounds such as ammonium persulfate, and the like, and heteropoly acids. Particularly preferred among these oxidizing agents are hydrogen peroxide and organic peroxides which contain no metals and whose decomposition products are harmless. The oxidizing agents above may be used alone or in combination of two or more.

As alkali metal hydroxides there may be used sodium hydroxide, potassium hydroxide, rubidium hydroxide, cesium hydroxide and the like. These alkali metal hydroxides may be used alone or in combination of two or more.

And an acid is not particularly restricted, and any organic acid or inorganic acid may be used. As organic acids there may be mentioned para-toluenesulfonic acid, dodecylbenzenesulfonic acid, isoprenesulfonic acid, gluconic acid, lactic acid, citric acid, tartaric acid, malic acid, glycolic acid, malonic acid, formic acid, oxalic acid, succinic acid, fumaric acid, maleic acid and phthalic acid. These organic acids may be used alone or in combinations of two or more. As inorganic acids there may be mentioned nitric acid, hydrochloric acid and sulfuric acid, and any one or more of these may be used. An organic acid and an inorganic acid may also be used in combination.

As surfactants there may be used cationic surfactants, anionic surfactants or non-ionic surfactants. As cationic surfactants there may be mentioned fatty amines, aliphatic ammonium salts and the like. As anionic surfactants there may be mentioned carboxylic acid salts such as fatty acid soaps and alkylether carboxylic acid salts, sulfonic acid salts such as alkylbenzenesulfonic acid salts, alkylnaphthalenesulfonic acid salts and a-olefinsulfonic acid salts, sulfuric acid ester salts such as higher alcohol sulfuric acid ester salts and alkylether sulfuric acid salts, and phosphoric acid esters such as alkylphosphoric acid esters and the like. These surfactants may be used alone or in combination of two or more.

A porous polishing pad can be obtained by incorporating a foaming agent, hollow particles and the like. The foaming agent may be used a chemical foaming agent and a physical foaming agent. As chemical foaming agents there may be mentioned azo compounds such as azodicarboxylic acid amide, nitroso compounds such as N,N'-dinitroso pentamethylene tetramine, and hydrazin derivatives such as 4,4'-oxybis(benzenesulfonylhydrazide). As physical foaming agents there may be mentioned water, nitrogen gas, carbon dioxide and the like. As hollow particles there may be mentioned "Expanyal" produced by Japan Filight CO., LTD..

The composition for forming a polishing pad in the invention may, if necessary, also incorporate various additives such as fillers, softeners, antioxidants, ultraviolet absorbers, antistatic agents, lubricants, plasticizers and the like. As fillers there may be used materials that improve rigidity such as calcium carbonate, magnesium carbonate, talc and clay, or materials that give a polishing effect, such as manganese dioxide, manganese trioxide and barium carbonate.

There are no particular restrictions on the method of producing the composition for forming a polishing pad. For example, it can be obtained by mixing [A], [B] above, [C] above and other additives incorporated if necessary, and kneading. The water-soluble substance [C] is preferably solid-state when incorporating. So long as it is a solid, the water-soluble substance can easily disperse with the aforementioned preferred mean particle size regardless of the degree of compatibility with the crosslinked body of at least [A] among [A] and [B] above, and can make processability of the polishing pad higher. Thus, it is preferred to select the type of water-soluble substance [C] in consideration of the kneading temperature of the [A] and [B] used. For the purpose of producing a composition containing a crosslinking agent, the mixture is preferably kneaded at the temperature not occuring crosslinking reaction. Kneader in producing the composition may be used rollers, kneaders, Banbury mixers, extruders (single-screw, multiple-screws) and the like.

The crosslinked body in the invention is one made up with the composition for forming a polishing pad above. It may be fixed or variable. In the case of producing a fixed form, the desired shape such as that of a sheet, block or film, by press molding, extrusion molding, injection molding and the like can be obtained. A polishing pad will be obtained by processing the material to the desired size.

The polishing pad in the invention can be manufactured by introducing the composition for forming a polishing pad above to the metal mold.

Shore D hardness of the polishing pad is preferably 35 or more, more preferably 50 to 90, and most preferably 60 to 85, but it is usually no greater than 100. Shore D hardness less than 35 leads to lower pressure applied to polishing surfaces during polishing, and the removal rate is reduced while the polishing flatness may also be inadequate.

The surface of the polishing pad (the polishing side) may be formed to the desired shape if necessary with a grid-like, helical, concentric and radial grooves and dot pattern, for the purpose of improving the discharging property of the slurry. To form grooves on the surface of the polishing pad, any of machining method such as cutting work, forming method using the metal mold having the template of the grooves and the like is selected. And the polishing pad may be the one which a softer layer is attached to the back side of the polishing pad (the side opposite the polishing side), and be given a multilayer structure. The shape of the polishing pad is not particularly restricted, and any appropriate shape, such as a disk, belt or roller shape, may be selected depending on the polishing apparatus.

### DESCRIPTION OF THE PREFERRED EMBODIMENTS

The present invention is further described in the following examples.

### [1] Preparation of composition and formation of polishing pad

### Example 1

99 wt% of (a) 1,2-polybutadiene (JSR CORP., trade name: "JSR RB830"), 1 wt% of (b) polybutadiene with hydroxyl groups at both ends (NIPPON SODA CO., LTD., trade name: "NISSO-PB G3000") and β-cyclodextrin (YOKOHAMAKOKUSAI BIOKENKYUJO CO., LTD., trade name: "Dexypearl β-100", mean particle size is about 20 µm.) were incorporated and kneaded in the kneader heated to 120°C. The content of (c) the water-soluble substance was 30 vol% based on the total of (a), (b) and (c) above.

After that, 1 part by weight of organic peroxide (NIPPON OIL & FATS CO., LTD., trade name "Percumyl D40") was added to 100 parts by weight of the total of (a) and (b). And by further kneading a composition (I) was prepared. After crosslinking reaction was carried out at 170°C for 15 minutes in a mold for shaping using the composition (I), a disk-shaped polishing pad with a diameter of 60 cm and a thickness of 2 mm was obtained.

### Example 2

Using sodium lauryl sulfate as an emulsifier and benzoyl peroxide as a polymerization initiator, monomers in a proportion of butadiene/acrylonitrile/methacrylic acid/2-hydroxybutyl methacrylate/ethyleneglycol dimethacrylate/ divinylbenzene = 62/20/5/11/1/2 (mole percent) were subjected to emulsion polymerization. The conversion was approximately 100%. Next, the resulting copolymer emulsion was then solidified and dried to prepare a (d) functional group-containing copolymer.

After that, 90 wt% of the above-mentioned (a) 1,2-polybutadiene, 8 wt% of (e) polybutadiene rubber (JSR CORP., trade name: "BR01"), 2 wt% of the above-mentioned (d) functional group-containing copolymer and the above-mentioned (c) water-soluble substance were mixed and kneaded in the kneader heated to 120°C. The content of (c) the water-soluble substance was 30 vol% based on the total of (a), (d), (e) and (c) above. And then, 1 part by weight of the organic peroxide used in Example 1 based on 100 parts by weight of the total of (a), (d), (e) and (c) was added to the kneaded material and further kneaded to prepare a composition (II). A polishing pad was obtained using the composition (II) in the same manner as Example 1.

### Reference Example 3

95 wt% of the above-mentioned (a) 1,2-polybutadiene and 5 wt% of the above-mentioned (b) polybutadiene with hydroxyl groups at both ends were mixed and kneaded in the kneader heated to 120°C. After that 1 part by weight of the above-mentioned organic peroxide based on 100 parts by weight of the total of (a) and (b) was added to the kneaded material and further kneaded to prepare a composition. A polishing pad was obtained using the composition in the same manner as Example 1.

### Comparative Example 1

70 vol% of the above-mentioned (a) 1,2-polybutadiene and 30 vol% of the above-mentioned (c) water-soluble substance were mixed and kneaded in the kneader heated to 120°C. After that 1 part by weight of the above-mentioned organic peroxide based on 100 parts by weight of (a) was added to the kneaded material and further kneaded to prepare a composition (III). A polishing pad was obtained using the composition (III) in the same manner as Example 1.

### Comparative Example 2

92 wt% of the above-mentioned (a) 1,2-polybutadiene, 8 wt% of the above-mentioned (e) polybutadiene rubber and 30 vol% of the above-mentioned (c) water-soluble substance based on the total of (a), (e) and (c) were mixed and kneaded in the kneader heated to 120°C. After that 1 part by weight of the above-mentioned organic peroxide based on 100 parts by weight of the total of (a), (e) and (c) was added to the kneaded material and further kneaded to prepare a composition (IV). A polishing pad was obtained using the composition (IV) in the same manner as Example 1.

### Comparative Example 3

30 wt% of the above-mentioned (a) 1,2-polybutadiene, 70 wt% of the above-mentioned (d) functional group-containing copolymer and 30 vol% of the above-mentioned (c) water-soluble substance based on the total of (a), (d) and (c) were mixed and kneaded in the kneader heated to 120°C. After that 1 part by weight of the above-mentioned organic peroxide based on 100 parts by weight of the total of (a), (d) and (c) was added to the kneaded material and further kneaded to prepare a composition (V). A polishing pad was obtained using the composition (V) in the same manner as Example 1.

### [2] Evaluation of polishing performance

Respective polishing pads obtained in Examples 1 and 2, as well as Reference Example 3 and Comparative Examples 1 to 3 were mounted on a surface plate of a polishing machine (SFT CORP., model "Lapmaster LGP510"), and a silica membrane wafer was polished under the conditions of the flat surface rotation number of 50 rpm and the slurry flow rate of 100 ml/min. to assess the difference in the polishing performance of each polishing pad and the result thereof are shown Table 1. The removal rate was obtained by measuring a change in a membrane thickness with an optical membrane thickness measuring machine.

**Table 1**

| | Example | | | Comparative example | | |
|---|---|---|---|---|---|---|
| | 1 | 2 | 3* | 1 | 2 | 3 |
| Removal rate (Å/min) | 1340 | 1440 | 1250 | 1080 | 1120 | 1280 |

| | | | | | | |
|---|---|---|---|---|---|---|
| *Reference Example | | | | | | |

According to Table 1, the removal rates using the polishing pads of Comparative Examples 1 and 2 which contained no substances with functional groups such as hydroxyl groups were 1080 and 1120 Å/min, respectively. The removal rate of Comparative Example 3 was improved a little, but the polishing pad was fragile and has some cracks and lacking on the surface. In contrast, the removal rates with the polishing pads of Examples 1 and 2 which contained substances with functional groups such as hydroxyl groups were 1340 and 1440 Å/min, respectively, representing a removal rate improvement of about 20-30% over the comparative examples, and therefore demonstrated to exhibit superior polishing performance.

It is an object of the application to provide a composition for forming a polishing pad comprising substances having specific functional groups exhibiting excellent hydrophilic properties and the like, a crosslinked body for polishing pad as well as a polishing pad with excellent water resisting and durability which exhibits excellent polishing performance including a high removal rate and method for producing thereof.

## Claims

1. A polishing pad obtainable by using a composition for forming a polishing pad comprising [A] a crosslinkable elastomer having no carboxyl, amino, hydroxyl, epoxy, sulfonic acid and phosphoric acid groups and [B] a water-insoluble substance having at least one functional group selected from the group consisting of carboxyl, amino, hydroxyl, epoxy, sulfonic acid and phosphoric acid groups and crosslinking agent [D], wherein the amount of [A] is 40 to 99.9 wt% and the amount of [B] is 0,1 to 60 wt%, based on 100 wt% of the total of [A] and [B], wherein a matrix material is formed by a co-crosslinking reaction of the components [A] and [B].

2. The polishing pad according to claim 1, wherein said [A] crosslinkable elastomer is 1,2-polybutadiene.

3. The polishing pad according to claim 1 or 2, wherein further said composition comprises [C] a water-soluble substance.

4. The polishing pad according to claim 3, wherein the amount of [C] is 5 to 50 vol% based on 100 vol% of the total of [A], [B] and [C].

5. The polishing pad according to claim 3 or 4, wherein said [C] water-soluble substance is cyclodextrin.

6. A polishing pad obtainable by processing a crosslinked body for a polishing pad produced by using a composition for forming a polishing pad comprising [A] a crosslinkable elastomer having no carboxyl, amino, hydroxyl, epoxy, sulfonic acid and phosphoric acid groups and [B] a water-insoluble substance having at least one functional group selected from the group consisting of carboxyl, amino, hydroxyl, epoxy, sulfonic acid and phosphoric acid groups and crosslinking agent [D], wherein the amount of [A] is 40 to 99,9 wt% and the amount of [B] is 0.1 to 60 wt%, based on 100 wt% of the total of [A] and [B], wherein a matrix material is formed by a co-crosslinking reaction of the components [A] and [B].

7. The polishing pad according to any one of claims 1 to 6, wherein said polishing pad is porous.

8. A method for producing a polishing pad comprising:
a first step for kneading a formulation (I) comprising
[A] a crosslinkable elastomer having no carboxyl, amino, hydroxyl, epoxy, sulfonic acid and phosphoric acid groups and [B] a water-insoluble substance having at least one functional group selected from the group consisting of carboxyl, amino, hydroxyl, epoxy, sulfonic acid and phosphoric acid groups, and crosslinking agent [D], wherein the amount of [A] is 40 to 99,9 wt% and the amount of [B] is 0,1 to 60 wt%, based on 100 wt% of the total of [A] and
[B] and wherein the components [A] and [B] are co-crosslinked with each other; and
a second step for molding into a polishing pad.

9. The method for producing a polishing pad according to claim 8, wherein said crosslinking agent [D] is an organic peroxide.

10. The method for producing a polishing pad according to claim 8 or 9, wherein the said formulation (I) further comprises [C] a water-soluble substance whose amount is 5 to 50 vol% based on 100 vol% of the total of [A], [B] and [C] .

11. A method for producing a polishing pad comprising:
a first step for manufacturing crosslinked body for a polishing pad produced by using a composition for forming a polishing pad comprising [A] a crosslinkable elastomer having no carboxyl, amino, hydroxyl, epoxy, sulfonic acid and phosphoric acid groups and [B] a water-insoluble substance having at least one functional group selected from the group consisting of carboxyl, amino, hydroxyl, epoxy, sulfonic acid and phosphoric acid groups, and crosslinking agent [D], wherein the amount of [A] is 40 to 99,9 wt% and the amount of [B] is 0,1 to 60 wt%, based on 100 wt% of the total of [A] and [B] and wherein the components [A] and [B] are co-crosslinked with each other; and
a second step for processing said crosslinked body for a polishing pad.

12. The method for producing a polishing pad according to claim 11, wherein said crosslinking agent [D] is an organic peroxide.

13. The method for producing a polishing pad according to claims 12 to 13, wherein said composition for forming a polishing pad further comprises [C] a water-soluble substance whose amount is 5 to 50 vol% based on 100 vol% of the total of [A], [B] and [C].

## Patentansprüche

1. Polierkissen, das durch Verwendung einer Zusammensetzung zur Erzeugung eines Polierkissens erhältlich ist, die [A] ein vernetzbares Elastomer ohne Carboxyl-, Amino-, Hydroxyl-, Epoxid-, Sulfonsäure- und Phosphorsäuregruppen, und [B] eine wasserunlösliche Substanz mit wenigstens einer funktionellen Gruppe, ausgewählt aus der Gruppe, bestehend aus Carboxyl-, Amino-, Hydroxyl-, Epoxid-, Sulfonsäure- und Phosphorsäuregruppen, und ein Vernetzungsmittel [D] umfasst, worin die Menge an [A] 40 bis 99,9 Gew.-% und die Menge an [B] 0,1 bis 60 Gew.-% ist, basierend auf 100 Gew.-% der Summe aus [A] und [B], wobei ein Matrixmaterial durch eine Co-Vernetzungsreaktion der Komponenten [A] und [B] erzeugt wird.

2. Das Polierkissen nach Anspruch 1, wobei das [A] vernetzbare Elastomer 1,2-Polybutadien ist.

3. Das Polierkissen nach Anspruch 1 oder 2, wobei die Zusammensetzung ferner [C] eine wasserlösliche Substanz umfasst.

4. Das Polierkissen nach Anspruch 3, wobei die Menge an [C] bei 5 bis 50 Vol.-%, basierend auf 100 Vol.-% der Summe aus [A], [B] und [C], liegt.

5. Das Polierkissen nach Anspruch 3 oder 4, wobei die wasserlösliche Substanz [C] Cyclodextrin ist.

6. Polierkissen, erhältlich durch Verarbeiten eines vernetzten Körpers für ein Polierkissen, das durch Verwendung einer Zusammensetzung zur Erzeugung eines Polierkissens hergestellt wird, die [A] ein vernetzbares Elastomer ohne Carboxyl-, Amino-, Hydroxyl-, Epoxid-, Sulfonsäure- und Phosphorsäuregruppen, und [B] eine wasserunlösliche Substanz mit wenigstens einer funktionellen Gruppe, ausgewählt aus der Gruppe, bestehend aus Carboxyl-, Amino-, Hydroxyl-, Epoxid-, Sulfonsäure- und Phosphorsäuregruppen, und ein Vernetzungsmittel [D] umfasst, worin die Menge an [A] 40 bis 99,9 Gew.-% und die Menge an [B] 0,1 bis 60 Gew.-% ist, basierend auf 100 Gew.-% der Summe aus [A] und [B], wobei ein Matrixmaterial durch eine Co-Vernetzungsreaktion der Komponenten [A] und [B] erzeugt wird.

7. Das Polierkissen nach irgendeinem der Ansprüche 1 bis 6, wobei das Polierkissen porös ist.

8. Verfahren zur Herstellung eines Polierkissens, umfassend:
einen ersten Schritt des Knetens einer Formulierung (I), die [A] ein vernetzbares Elastomer ohne Carboxyl-, Amino-, Hydroxyl, Epoxid-, Sulfonsäure- und Phosphorsäuregruppen, und [B] eine wasserunlösliche Substanz mit wenigstens einer funktionellen Gruppe, ausgewählt aus der Gruppe, bestehend aus Carboxyl-, Amino-, Hydroxyl-, Epoxid-, Sulfonsäure- und Phosphorsäuregruppen, und ein Vernetzungsmittel [D] umfasst, worin die Menge an [A] 40 bis 99,9 Gew.-% und die Menge an [B] 0,1 bis 60 Gew.-% ist, basierend auf 100 Gew.-% der Summe aus [A] und [B], und worin die Komponenten [A] und [B] miteinander co-vernetzt werden; und
einen zweiten Schritt zur Formung in ein Polierkissen.

9. Das Verfahren zur Erzeugung eines Polierkissens nach Anspruch 8, wobei das Vernetzungsmittel [D] ein organisches Peroxid ist.

10. Das Verfahren zur Erzeugung eines Polierkissens nach Anspruch 8 oder 9, wobei die Formulierung (I) ferner [C] eine wasserlösliche Substanz umfasst, deren Menge 5 bis 50 Vol.-% ist, basierend auf der Summe aus [A], [B] und [C].

11. Verfahren zur Erzeugung eines Polierkissens, umfassend:
einen ersten Schritt zur Herstellung eines vernetzten Körpers für ein Polierkissen, der durch Verwendung einer Zusammensetzung zur Erzeugung eines Polierkissens hergestellt wird, die [A] ein vernetzbares Elastomer ohne Carboxyl-, Amino-, Hydroxyl-, Epoxid-, Sulfonsäure- und Phosphorsäuregruppen, und [B] eine wasserunlösliche Substanz mit wenigstens einer funktionellen Gruppe, ausgewählt aus der Gruppe, bestehend aus Carboxyl-, Amino-, Hydroxyl-, Epoxid-, Sulfonsäure- und Phosphorsäuregruppen, und ein Vernetzungsmittel [D] umfasst, worin die Menge an [A] 40 bis 99,9 Gew.-% und die Menge an [B] 0,1 bis 60 Gew.-% ist, basierend auf 100 Gew.-% der Summe aus [A] und [B], worin die Komponenten [A] und [B] miteinander co-vernetzt werden; und
einen zweiten Schritt zur Verarbeitung des vernetzten Körpers für ein Polierkissen.

12. Das Verfahren zur Erzeugung eines Polierkissens nach Anspruch 11, wobei das Vernetzungsmittel [D] ein organisches Peroxid ist.

13. Das Verfahren zur Erzeugung eines Polierkissens nach Anspruch 12 oder 13, wobei die Zusammensetzung zur Erzeugung eines Polierkissens ferner [C] eine wasserlösliche Substanz umfasst, deren Menge 5 bis 50 Vol.-% ist, basierend auf 100 Vol.-% aus der Summe aus [A], [B] und [C].

## Revendications

1. Tampon de polissage qui peut être obtenu en utilisant une composition pour former un tampon de polissage comprenant [A] un élastomère réticulable n'ayant pas de groupes acide phosphorique, acide sulfonique, époxy, hydroxyle, aminés, carboxyle et [B] une substance insoluble dans l'eau ayant au moins un groupe fonctionnel sélectionné à partir du groupe consistant en des groupes acide phosphorique, acide sulfonique, époxy, hydroxyle, aminés, carboxyle et un agent réticulant [D], où la quantité de [A] est de 40 à 99,9% en poids et la quantité de [B] est de 0,1 à 60% en poids, sur la base de 100% en poids du total de [A] et de [B], où un matériau matriciel est formé par une réaction de co-réticulation des composants [A] et [B].

2. Tampon de polissage selon la revendication 1, dans lequel ledit [A] élastomère réticulable est du 1,2-polybutadiène.

3. Tampon de polissage selon la revendication 1 ou 2, dans lequel ladite composition comprend en plus [C] une substance soluble dans l'eau.

4. Tampon de polissage selon la revendication 3, dans lequel la quantité de [C] est de 5 à 50% en volume sur la base de 100% en volume du total de [A], [B] et [C].

5. Tampon de polissage selon la revendication 3 ou 4, dans lequel ladite [C] substance soluble dans l'eau est du cyclodextrine.

6. Tampon de polissage qui peut être obtenu en traitant un corps réticulé pour un tampon de polissage produit en utilisant une composition pour former un tampon de polissage comprenant [A] un élastomère réticulable n'ayant pas de groupes acide phosphorique, acide sulfonique, époxy, hydroxyle, aminés, carboxyle et [B] une substance insoluble dans l'eau ayant au moins un groupe fonctionnel sélectionné à partir du groupe consistant en des groupes acide phosphorique, acide sulfonique, époxy, hydroxyle, aminés, carboxyle et un agent réticulant [D], où la quantité de [A] est de 40 à 99,9% en poids et la quantité de [B] est de 0,1 à 60% en poids, sur la base de 100% en poids du total de [A] et de [B], où un matériau matriciel est formé par une réaction de co-réticulation des composants [A] et [B].

7. Tampon de polissage selon l'une quelconque des revendications 1 à 6, dans lequel ledit tampon de polissage est poreux.

8. Procédé de production d'un tampon de polissage comprenant:
une première étape de pétrissage d'une formulation (I) comprenant [A] un élastomère réticulable n'ayant pas de groupes acide phosphorique, acide sulfonique, époxy, hydroxyle, aminés, carboxyle et [B] une substance insoluble dans l'eau ayant au moins un groupe fonctionnel sélectionné à partir du groupe consistant en des groupes acide phosphorique, acide sulfonique, époxy, hydroxyle, aminés, carboxyle et un agent réticulant [D], où la quantité de [A] est de 40 à 99,9% en poids et la quantité de [B] est de 0,1 à 60% en poids, sur la base de 100% en poids du total de [A] et de [B] et où les composants [A] et [B] sont co-réticulés ensemble; et
une deuxième étape de moulage dans un tampon de polissage.

9. Procédé de production d'un tampon de polissage selon la revendication 8, dan lequel ledit agent réticulant [D] est un peroxyde organique.

10. Procédé de production d'un tampon de polissage selon la revendication 8 ou 9, dans lequel ladite formulation (I) comprend en plus [C] une substance soluble dans l'eau dont la quantité est de 5 à 50% en volume sur la base de 100% en volume du total de [A], [B] et [C].

11. Procédé de production d'un tampon de polissage comprenant:
une première étape de fabrication d'un corps réticulé pour un tampon de polissage produit en utilisant une composition pour former un tampon de polissage comprenant [A] un élastomère réticulable n'ayant pas de groupes acide phosphorique, acide sulfonique, époxy, hydroxyle, aminés, carboxyle et [B] une substance insoluble dans l'eau ayant au moins un groupe fonctionnel sélectionné à partir du groupe consistant en des groupes acide phosphorique, acide sulfonique, époxy, hydroxyle, aminés, carboxyle et un agent réticulant [D], où la quantité de [A] est de 40 à 99,9% en poids et la quantité de [B] est de 0,1 à 60% en poids, sur la base de 100% en poids du total de [A] et de [B] et où les composants [A] et [B] sont co-réticulés ensemble; et
une deuxième étape de traitement dudit corps réticulé pour un tampon de polissage.

12. Procédé de production d'un tampon de polissage selon la revendication 11, dans lequel ledit agent réticulant [D] est un peroxyde organique.

13. Procédé de production d'un tampon de polissage selon les revendications 12 à 13, dans lequel ladite composition pour former un tampon de polissage comprend en plus [C] une substance soluble dans l'eau dont la quantité est de 5 à 50% en volume sur la base de 100% en volume du total de [A], [B] et [C].
